# EUROPEAN PATENT APPLICATION

(11) **EP 3 978 201 A1**
(43) Date of publication of application: **06.04.2022**
(21) Application number: 20199159.3
(22) Date of filing: 30.09.2020
(51) Int. Cl.: B25J 9/16, B25J 11/00

(54) **METHOD OF CONTROLLING A CONSTRUCTION ROBOT AND CONSTRUCTION ROBOT**

(71) Applicant: Hilti Aktiengesellschaft, 9494 Schaan (LI)
(72) Inventor: Siu Da Silva, Mitsiu Jose, 9475 Sevelen (CH)
(74) Representative: Hilti Aktiengesellschaft Corporate Intellectual Property

(57) **Abstract**

The invention presents a particularly efficient and user-friendly method for controlling a construction robot (10) in a working area (12) of a construction site, the construction robot (10) being configured to manipulate a construction element (14) of the working area (12), wherein the method comprises the steps (110, 120, 130, 140, 150, 160, 170): detecting and determining at least one of the position, the geometry, or the orientation of the construction element (14) within the working area (12); capturing a gesture of a user of the construction robot (10); generating a mixed-reality image (24) comprising a representation (15) of the construction element (14) or at least of a part of the construction element (14) and a virtual object (34) at a virtual position within a virtual space (13), wherein the virtual space (13) corresponds to the working area (12), wherein the virtual position is chosen in dependence of the gesture; and making the construction robot (10) manipulate the construction element (14) at a position within the working area (12) depending on the virtual position of the virtual object (34) within the virtual space (13). Furthermore, the invention relates to a construction robot (10) and a use of a construction robot (10).

## Description

The present invention relates to a method for controlling a construction robot in a working area of a construction site, the construction robot being configured to manipulate a construction element in the working area. The invention further relates to a construction robot and a use of a construction robot.

In the field of building construction, there is a need for particularly simple ways to control, in particular to program, autonomously working machines.

Hence, it is an object of the invention to present a method for controlling a construction robot, a construction robot and a use of a construction robot, which permit to control a construction robot in a particularly simple fashion.

This object is solved by a method for controlling a construction robot in a working area of a construction site, the construction robot being configured to manipulate a construction element of the working area, wherein the method comprises the steps
a. detecting and determining at least one of the position, the geometry, or the orientation of the construction element within the working area;
b. capturing a gesture of a user of the construction robot;
c. generating a mixed-reality image comprising a representation of the construction element or at least of a part of the construction element and a virtual object at a virtual position within a virtual space, wherein the virtual space corresponds to the working area, wherein the virtual position is chosen in dependence of the gesture; and
d. making the construction robot manipulate the construction element at a position within the working area depending on the virtual position of the virtual object within the virtual space.

The construction robot may be arranged for works at a building construction site. The construction robot need and / or may not be arranged for mining works.

The construction element may be made of or at least comprise natural or artificial stone, for example concrete. The construction element may be or at least comprise a floor, a wall, a ceiling, or an object in a building, for example, a pipe, to be worked on or the like.

Manipulating the construction element may preferably comprise at least one of drilling, grinding, sawing, chiselling, grabbing an object, moving the object to a position close to the construction element, setting an anchor, e. g. a nail or a screw or the like, on the construction element or fastening the object to the construction element.

Thus, in order to manipulate the construction element, for example, in order to drill, at a specific position, the user may execute the gesture. The gesture may be at least one of a button press, for example on a remote control, a movement of a laser pointer, or a gesture of at least one of an arm, a hand, a finger, or another body part. In particular, the gesture may define a position within the working area. The position may be linked to the at least one working position at which the construction robot is supposed to work, e.g. to drill a borehole. The position defined by the gesture may be different to the at least one working position. In particular, this may be the case if the gesture defines a position of an object to be mounted to the construction element. Then the at least one working position may be implicitly defined by the object or at least by the type of object in conjunction with the position defined by the gesture. For this, the construction robot may comprise a memory unit with data base data containing a plurality of objects and their associated working positions.

For example, the object may be a bracket, which is to be fixed to the construction element at two fixation positions. So, two working positions may be defined by each one of the two fixation positions in conjunction with the position defined by the gesture. In this context "object" may be understood in a broad sense. For example, if only a borehole is to be drilled into the construction element, "object" may correspond to the position of the borehole.

The mixed-reality image generated preferably comprises a virtual view on the object to be mounted to the construction element, that is a virtual view on the final product after the construction robot having manipulated the construction element.

The construction robot may be configured to plan a movement path so as to manipulate the construction element at the at least one working position.

In contrast to a traditional method for controlling the construction robot by teaching it step by step each single movement to be executed, the user is only required to input the final state to be manufactured by the construction robot. Thus, the method for controlling the construction robot according to the invention results in an intuitive and greatly simplified handling of the construction robot. In particular, there is no need for the user to know about available degrees of freedom of the construction robot, programming languages, or other technical characteristics of the construction robot. This simplification is of particular interest in view of the traditional users at construction sites not being used to robotic programming languages, or the like.

The detection and determination of the at least one of the position, the geometry, or the orientation of the construction element may preferably be effectuated by optical imaging, in particular by 3D imaging. It may be realized using laser scanning measurements, time-of-flight measurements, or the like. The detection and/or the determination may include scanning for and/or detecting further objects, in particular unexpected or unexpectable objects, within the working area.

The mixed-reality image may comprise at least one representation of a non-existing object, that is of a virtual object. It may further comprise a representation of an already existing construction element. The already existing construction element may be at least one of the previously detected construction elements within the working area. The way of representing the virtual object and/or the construction element might be as a computer-generated graphic or as a photographic image.

In a preferred embodiment of the invention, the method comprises a step during which a planned movement of the construction robot is simulated by representing the planned movement within the virtual space of the mixed-reality image. A user can thus verify that the planned movement is not blocked by obstacles or the like not yet considered or noticed.

Furthermore, if the method comprises a step, wherein the mixed-reality image shows a representation of at least a part of the construction robot in combination with a simulated representation of that part of the construction robot, preferably in an overlayed fashion, the user can verify the quality of measurements. In particular, an indication whether measurement errors remain acceptable may be derived from the relative displacement between the representation of the real construction robot with the simulated representation.

Preferably, the mixed-reality image may be presented to the user. The mixed-reality image may additionally or alternatively be processed by an image analysing unit of the construction robot. The image analysing unit may be part of the control unit. The image analysing unit may derive a quality measure; the quality measure may be a relative offset, in particular between the representation of the real construction robot and the simulated representation.

To further avoid malfunctioning, a collision free map of locations to which at least a part of the construction robot can move without colliding with an environmental object may be generated in order to facilitate the path planning.

To facilitate the planning of the movement, at least a distance between the construction robot and the construction element may be measured. The measurement may be by optical means, by distance detectors like time-of-flight detectors, or the like. The measurement may comprise the detection of a wall, a floor, a ceiling, or another construction element.

A working zone reachable by the construction robot may be shown in the mixed-reality image. The representation of the working zone within the mixed-reality image may be adapted to the position and/or the orientation of the construction element. Thus, the user can recognize, if, for example, the construction robot is distanced too far away from the construction site.

The method may comprise a step of checking for physical feasibility. For example, it may be checked that positions for boreholes to be drilled into the construction element, are indeed placed on the surface of the construction element. Otherwise, the user input may be rejected and / or re-requested.

The virtual object may represent a three-dimensional object, in particular a bar, a pipe, a bracket, a cable, an anchor, or an element made of stone, e. g. an object made of concrete. It or at least a template of it may be stored in the memory unit. The virtual object or the template may be stored and / or may be recalled in a parameterizable fashion. For example, a template may represent a plurality of virtual objects of different sizes. The particular size of the virtual object to be created from the template may be manually selectable.

The mixed reality image may be presented to the user using mixed-reality glasses. The mixed-reality glasses may be capable of presenting an augmented reality to the user. They may comprise sensors, for example, for measuring the user's head direction and / or the user's viewing direction. They may comprise a plurality of at least semi-transparent displaying means. Thus the mixed-reality image may comprise a direct view on the working area behind the displaying means overlaid with a presentation of the virtual object.

Another aspect of the invention relates to a construction robot, comprising a control unit, characterized in that the control unit is configured to execute the method according to the invention. The control unit may comprise and / or may be implemented on a computing unit of the construction robot, on which code may be executable, that realizes at least one step of the method according to the invention.

A construction robot that is mobile offers a broad field of applications on a construction site. The construction robot may comprise a carrier. The construction robot, particularly the carrier, may comprise one or more, in particular two, three or four, wheels. It may be a tracked vehicle. It may be or at least comprise an unmanned aerial vehicle, for example, a drone.

Furthermore, the construction robot may comprise a mixed-reality displaying means, in particular, it may comprise mixed-reality glasses.

The construction robot may be configured to work natural or artificial stone, e. g. concrete.

The construction robot may comprise a physics engine. The physics engine may comprise a collision and/or a contact detecting unit. The physics engine may be adapted for checking the physical feasibility of a placement of an object.

The construction robot may comprise a memory unit. The memory unit may include data base data. The data base data may comprise data about a plurality of objects, for example of brackets, base plates, pipes, etc. The data may comprise dimension and / or position data.

The construction robot may comprise a robotic arm. The robotic arm may be multiaxially movable. The robotic arm may have an end effector. The end effector may comprise a tool holder, in particular for holding a power tool or the like.

The construction robot may be configured to be used in building construction, civil engineering or the like. The construction robot may not be adapted to mining.

The construction robot may also comprise an object store, for example for storing a plurality of objects like brackets, pipe pieces, anchors or the like. Additionally, or in the alternative, the construction robot may comprise a tool store, for example for storing a plurality of tools like drill bits, chiselling tools, saw blades, or the like.

A further aspect of the invention relates to a use of a construction robot according to the invention for installing an object onto a construction element or at least for preparing the construction element for the installation of the object.

The invention will be described further, by way of example, with reference to the accompanying drawings which illustrate preferred embodiments thereof, it being understood that the following description is illustrative of and not limitative of the scope of the invention. The features shown there are not necessarily to be understood to scale and are presented in such a way that the special features of the invention are clearly visible. The various features may be realized individually or in combination in any desired way in variants of the invention.

**In the drawings:**
- **figures 1 to 7**: show a construction robot executing a sequence of steps of a method for controlling the construction robot;
- **figure 8**: shows an alternative construction robot.

Same reference signs are used for functionally equivalent elements in all figures.

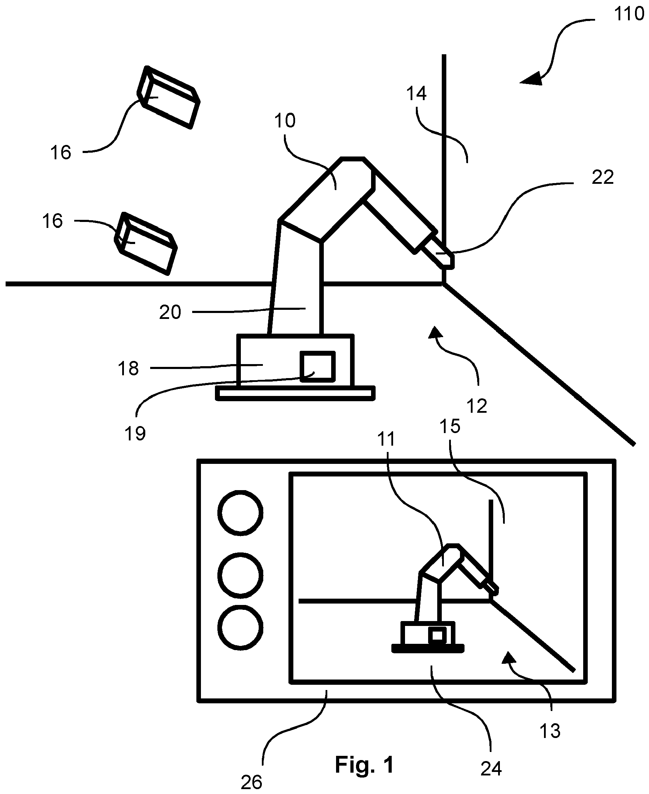

**Figure 1** shows a first step **110** of a method for controlling a construction robot **10**. The construction robot 10 comprises a control unit **19**.

As will be described in more detail in the following, the control unit 19 is configured to execute the method according to the invention.

The construction robot 10 is to execute a task of manipulating a construction element 14, the construction element 14 being a wall within the working area 12.

In the present example, the task to be executed consists of drilling two boreholes into the construction element **14.** The position of the two boreholes is to correspond to two fixing positions of an object, for example a base plate, so that the object may be mounted onto the construction element 14.

As is described in the following, in order to control the construction robot 10, the construction robot 10 is taught the task, which is executed subsequently.

A 3D image capturing device **16** monitors the working area 12. The 3D image capturing device 16 comprises a plurality of separate cameras. Thus, the 3D image capturing device 16 is adapted to capture a photographic image of the working area 12 including depth information. The 3D image capturing device 16 is mounted at a distance from the rest of the construction robot 10. In an alternative embodiment of the invention, it may also be integrated into the rest of the construction robot 10.

The construction robot 10 comprises a support **18**, on which a robotic arm **20** with an end effector **22** is mounted. The support 18 is a mobile support. It may be adapted to move autonomously or remote-controlled. Hence, the construction robot 10 is mobile.

The end effector 22 comprises a tool holder. The tool holder is equipped with a drill bit. The end effector 22 can drive the tool holder and thus the drill bit. Hence, the construction robot 10 is configured to manipulate the construction element 14 of the working area 12; in particular, it is configured to drill boreholes into the construction element 14.

The control unit 19 comprises a microprocessor and a memory unit, so that programming code stored in the memory unit can be run on the computing unit 19 in order to apply the method according to the invention to the construction robot 10.

The computing unit 19 analyses information gathered by the 3D image capturing device 16 within the working area 12. The analysis preferably comprises optical image processing. In particular, the construction element 14, i.e. the wall, is detected and its geometry, its relative position and its relative orientation, each at least in relation to the construction robot 10 or in relation to a pre-defined coordinate system, within the working area 12 are determined. For this, a plurality of distances, for example a distance between the construction robot 10 and the construction element 14, are measured using depth information generated by the 3D image capturing device 16.

As a further result of the analysis, the computing unit 19 generates a collision-free map of locations to which at least a part of the construction robot (10) can move without colliding with an environmental object.

A mixed-reality image **24** is generated and displayed on a displaying unit **26**. The mixed-reality image 24 can thus be presented to a user of the construction robot 10.

The mixed-reality image 24 comprises a virtual space **13** corresponding to the working area 12. The construction robot 10 is represented within the virtual space 13 in form of a representation **11** of the construction robot 10. The construction element 14 is represented within the virtual space 13 in form of a representation **15** of the construction element 14.

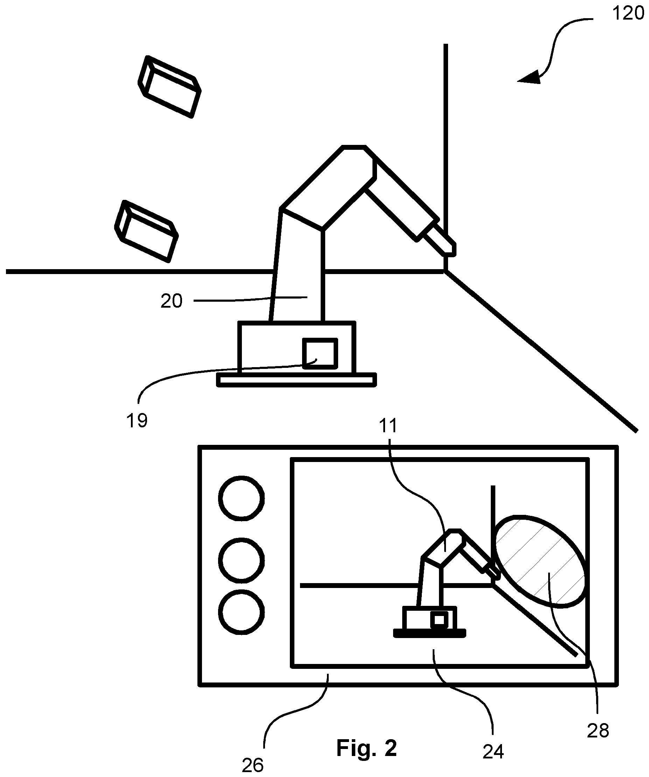

**Figure 2** shows a subsequent step **120** of the method according to the invention.

In this step 120, a working zone **28** within the reach of the construction robot 10 is calculated using the information of the 3D image capturing device and in accordance with the mechanical capabilities of the construction robot 10 and in particular in accordance with the mechanical capabilities of the robotic arm 20.

The working zone 28 is marked within the mixed-reality image 24 displayed by the displaying unit 26. Thus, the user is informed about the range, within which the robotic arm 20, represented within the mixed-reality image 24 by the representation 11, is capable to work. The user may subsequently decide, if, for example, the construction robot 10 is to be relocated before executing the task. In an alternative embodiment of the invention, the computing unit 19 may make this decision autonomously and / or move to a more suitable position automatically.

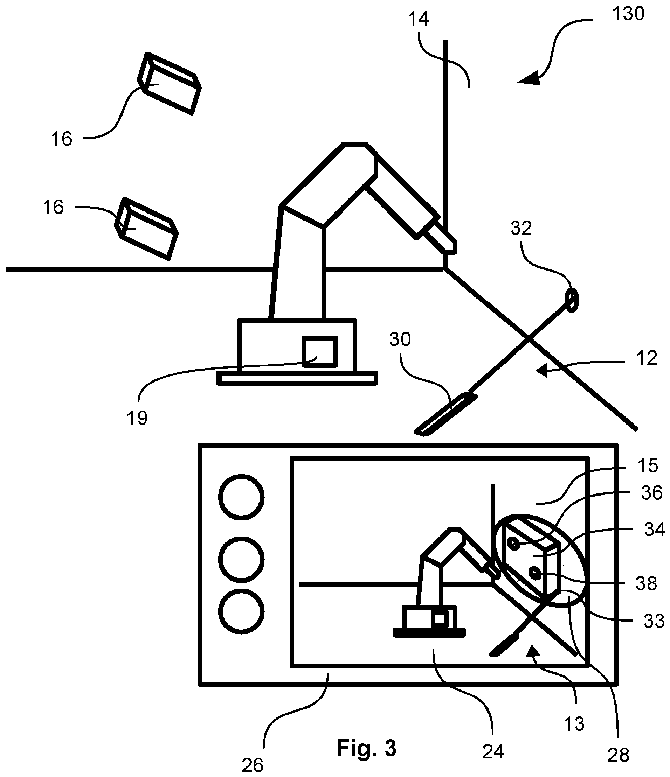

**Figure 3** shows a further step **130** of the method according to the invention.

Within this step, the user describes the task to be executed by the construction robot 10.

The user executes a gesture. In the present example, the gesture comprises that the user directs a laser beam of a laser pointer **30** to a position **32** on the construction element 14. A specific type of object to be mounted on the construction element 14, in the present example a base plate, has previously been linked to this gesture and is thus automatically selected by the gesture.

As an alternative, the gesture may comprise a selection of an object to be installed on the construction element 14. For this, the user may be presented a list of objects on the displaying unit 26, from which the user may select an object by tapping on the display or by another gesture, e. g. by a specific finger movement. The finger movement may be captured by the 3D image capturing device 16.

The position 32 is detected using the 3D imaging system 16. According to the position 32 a mixed-reality image 24 comprising the representation 15 of the construction element 14 and a virtual object **34** at a virtual position **33** within the virtual space 13 is generated by the control unit 19. The virtual position 33 is chosen in dependence of the gesture. In particular, the virtual position 33 is chosen in relation to the virtual space 13 such that it corresponds to the position 32 in relation to the working area 12.

Then, the control unit 19 executes a check for physical feasibility. In particular, it checks that an object corresponding to the virtual object 34 is placeable at the position 32 in a physically feasible manner. For example, it is checked that the object does not extend into another construction element, for example into the floor, into the ceiling, or into a wall, or into another object within the working area 12. Furthermore, it is checked that the object does not float freely in the air. The check may also comprise object-dependent aspects, for example that the position of the object results in working positions that are physically feasible and / or that are consistent with object-dependent and / or construction element 14-dependent requirements.

Then, the mixed-reality image 24 is renewed and generated such that it comprises the representation 15 of the construction element 14 and a virtual object 34 corresponding to the object chosen according to the gesture at the virtual position 33 within the virtual space 13, wherein, as previously described, the virtual position 33 has been chosen in dependence of the gesture.

As before, the working zone 28 remains visible in this mixed-reality image 24.

According to information stored in the memory unit about the object or, respectively the corresponding virtual object 34, the mixed-reality image 24 also comprises two boreholes **36** and **38**.

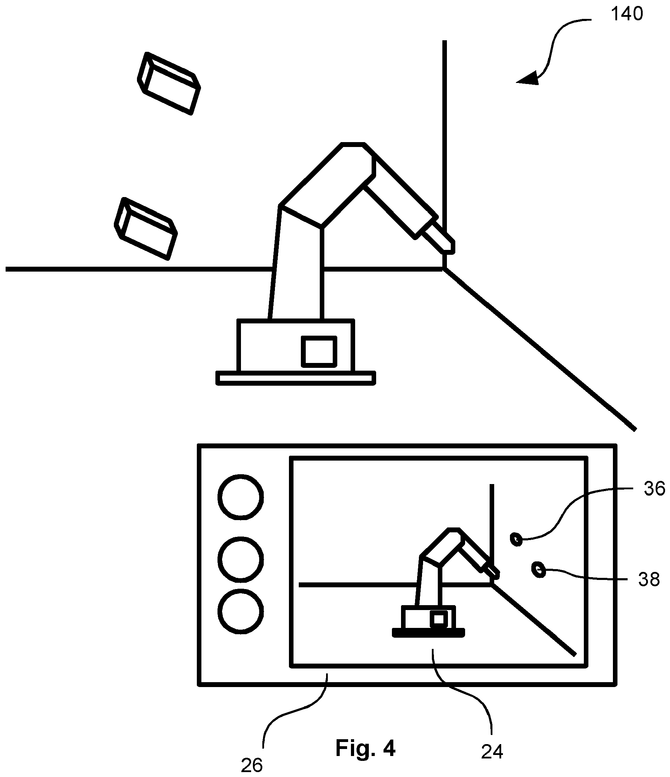

In a further step **140** of the method, represented in **figure 4**, the user acknowledges, for example by pressing on a button of the displaying unit 26, and thus defines the positions of the boreholes 36 and 38, which are shown in the mixed-reality image 24.

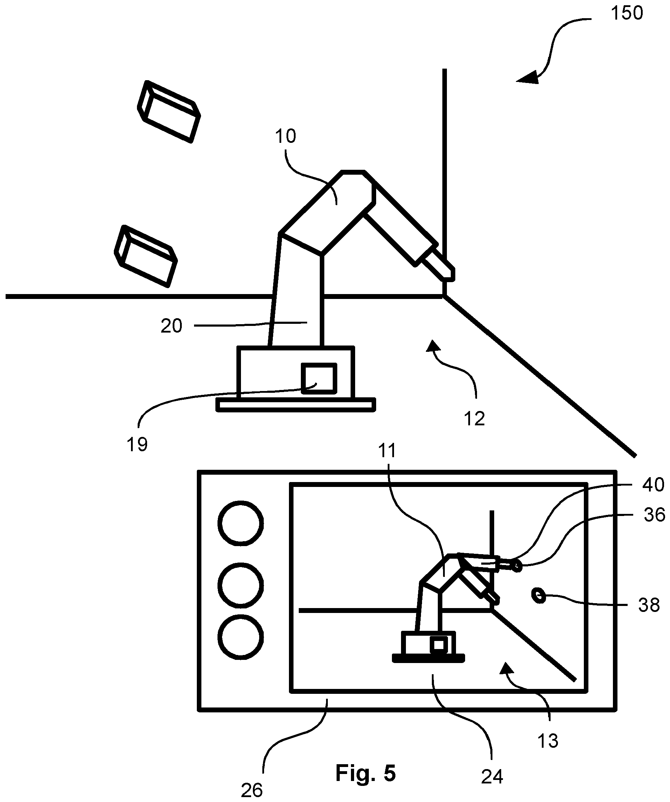

**Figure 5** shows a next step **150** of the method. In this step 150 a drilling process of the construction robot 10 is simulated.

First, a movement planning subprogram is run on the control unit 19 in order to plan a movement path of the construction robot 10, in particular of the robotic arm 20.

The mixed-reality image 24 is renewed to show a representation 11 of the construction robot 10. The mixed-reality image 24 further comprises an overlay image of a simulated robotic arm 40. The simulated robotic arm 40 is moved consecutively within the mixed-reality image 24 according to the planned movement path of the construction robot 10.

Thus, the user can check and verify the feasibility of the planned movement path. As the mixed-reality image 24 also comprises a representation of the reality according to the working area 12 in form of the virtual space 13, unexpected obstacles or the like, which, for example, have not been detected so far or which might interfere with the planned movement path, would thus also be visible in the mixed-reality image 24.

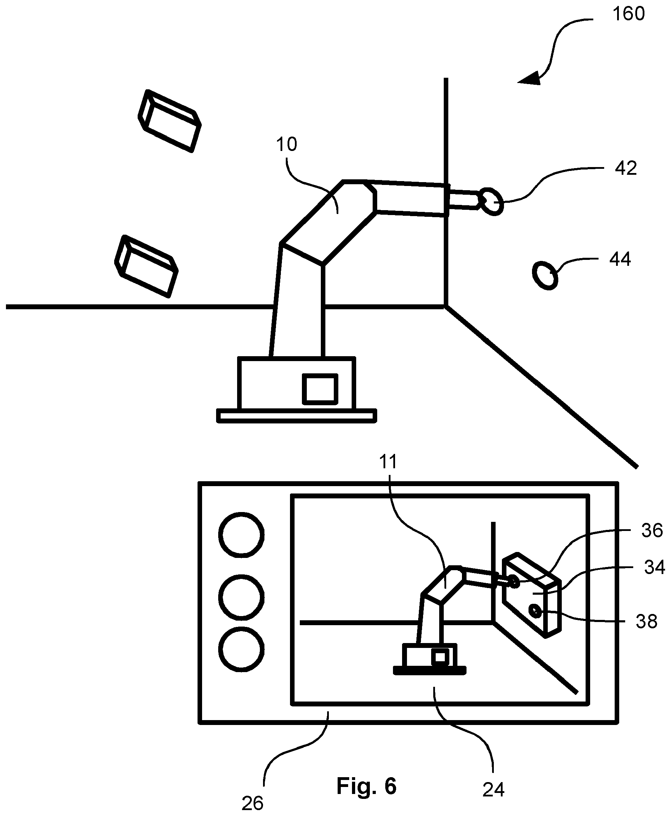

In a further step **160**, which is shown in **figure 6**, of the method according to the invention the user acknowledges the planned movement path, for example by pressing another button of the displaying unit 26.

The construction robot 10 starts to execute the planned movement path and drills boreholes **42** and **44** at positions that correspond to the previously defined positions 36 and 38 of the virtual object 34.

During this phase the user may supervise the drilling process of the construction robot 10 with the aid of the mixed-reality image 24 showing a representation 11 of the construction robot 10 in conjunction with an overlaid image of the virtual object 34 with its positions 36 and 38.

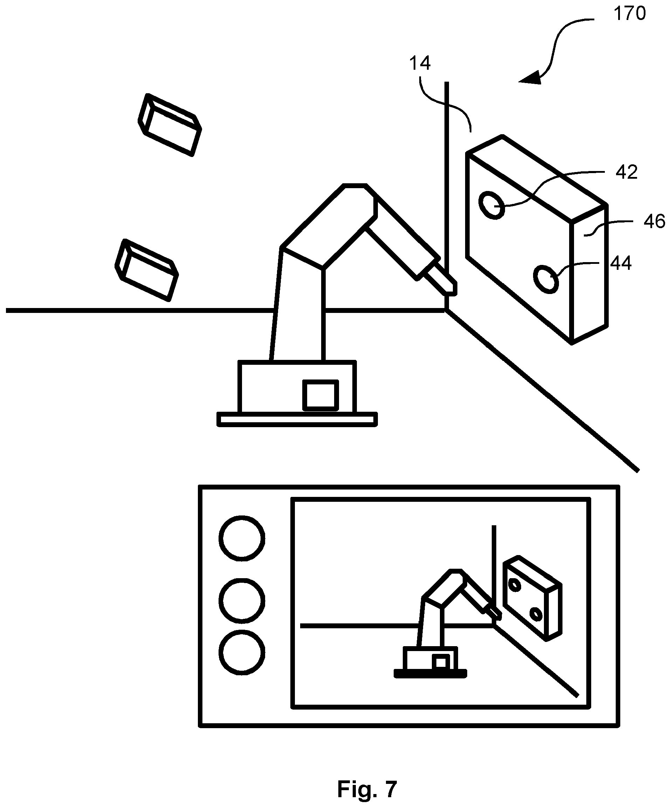

**Figure 7** shows a step **170** of the method. This step 170 may follow after the drilling process according to the step 160 has been completed, and, thus, boreholes 42 and 44 have been drilled into the construction element 14.

In this step, the user may mount an object **46**, which corresponds to the previously selected object, onto the construction element 14 and fix it to the construction element 14 using the boreholes 42 and 44.

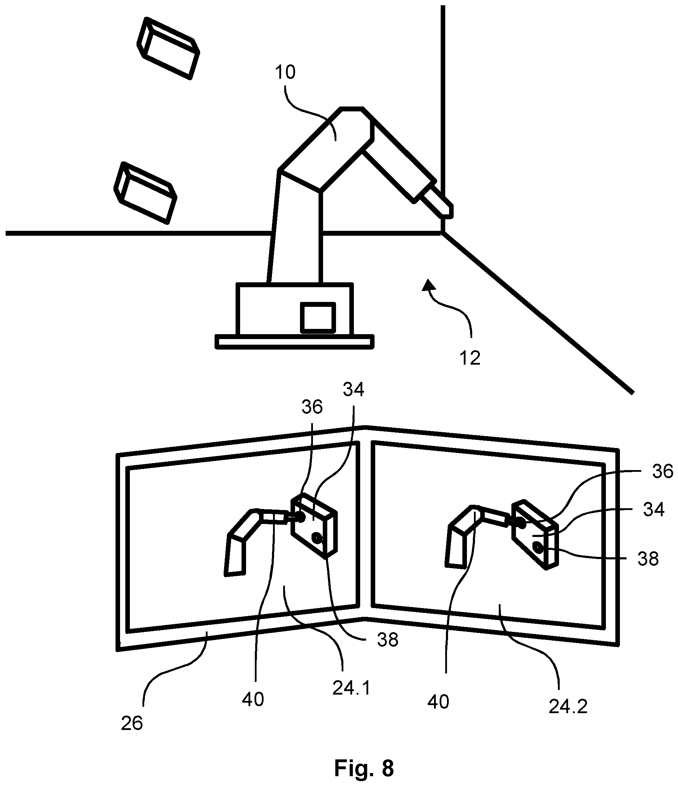

**Figure 8** shows an alternative embodiment of the construction robot 10. Unless otherwise explicitly described, this embodiment corresponds to the previously described embodiment of the construction robot 10.

Whereas in the previously described embodiment the displaying unit 26 corresponds to a single display, for example of a tablet computer or a mobile telephone, the displaying unit 26 according to the embodiment of figure 8 comprises mixed-reality glasses.

Hence, it comprises two displaying facilities, which display images **24.1** and **24.2**. The two images 24.1 and 24.2 correspond together to the previously described mixed-reality image 24. The displaying facilities are transparent or at least semi-transparent.

They present images corresponding to different viewing angles, so that the user may see a binocularly presented three-dimensional image.

As an example, the situation shown in figure 8 corresponds to the step 150, that is the step of simulating the planned movement path.

As can be concluded from a comparison between figure 8 and figure 5 the mixed-reality images 24.1 and 24.2 need to show only the simulated robotic arm 40 and the virtual object 34 with its positions 36 and 38. By looking through the transparent or at least semi-transparent displaying unit 26 or the mixed-reality glasses, the user sees an overlaid, mixed-reality image comprising the images 24.1 and 24.2 and the view on the real working zone 12 with the construction robot 10.

For an optimized impression of immersion for the user the displaying unit 26, that is the mixed-reality glasses, comprises several sensors, in particular sensors for detecting the viewing directions of the eyes of the user, and / or position sensors for determining the position of the user in relation to the working area 12, in particular in relation to the construction robot 10.

Whereas in the previous exemplary presentations of the method according to the invention the task to be executed by the construction robot has been related to the mounting of an object, the method may also be applied in case that one or more points or areas of the construction element is or are to be manipulated. In this case, the mixed-reality image 24 may comprise a symbol, e. g. a circle or a hair cross, as virtual object 34 at a position corresponding to the working position at which the construction robot 10 is to manipulate the construction element 14.

## Claims

1. **Method** for controlling a construction robot (10) in a working area (12) of a construction site, the construction robot (10) being configured to manipulate a construction element (14) of the working area (12), the method comprising the steps (110, 120, 130, 140, 150, 160, 170):
a. detecting and determining at least one of the position, the geometry, or the orientation of the construction element (14) within the working area (12);
b. capturing a gesture of a user of the construction robot (10);
c. generating a mixed-reality image (24) comprising a representation (15) of the construction element (14) or at least of a part of the construction element (14) and a virtual object (34) at a virtual position within a virtual space (13), wherein the virtual space (13) corresponds to the working area (12), wherein the virtual position is chosen in dependence of the gesture; and
d. making the construction robot (10) manipulate the construction element (14) at a position within the working area (12) depending on the virtual position of the virtual object (34) within the virtual space (13).

2. Method according to claim 1, **characterized in that** the method comprises a step (150) during which a planned movement of the construction robot (10) is simulated by representing the planned movement within the virtual space (13) of the mixed-reality image (24).

3. Method according one of the preceding claims, **characterized in that** the method comprises a step (150), wherein the mixed-reality image (24) shows a representation (11) of at least a part of the construction robot (10) in combination with a simulated representation (40) of that part of the construction robot (10), preferably in an overlaid fashion.

4. Method according to one of the preceding claims, **characterized in that** a collision-free map of locations to which at least a part of the construction robot (10) can move without colliding with an environmental object is generated.

5. Method according to one of the preceding claims, **characterized in that** a distance between the construction robot (10) and the construction element (14) is measured.

6. Method according to one of the preceding claims, **characterized in that** a working zone (28) reachable by the construction robot (10) is shown in the mixed-reality image (24).

7. Method according to one of the preceding claims, **characterized in that** the method comprises a step (130) of checking for physical feasibility.

8. Method according to one of the preceding claims, **characterized in that** the virtual object (34) represents a three-dimensional object (46), in particular a bar, a pipe, a bracket, a base plate, a cable, an anchor, or an element made of stone, e. g. an object made of concrete.

9. Method according to one of the preceding claims, **characterized in that** the mixed-reality image (24) is presented to the user using mixed-reality glasses.

10. **Construction robot** (10), comprising a control unit (19), **characterized in that** the control unit (19) is configured to execute the method according to one of the preceding claims.

11. Construction robot according to the preceding claim, **characterized in that** the construction robot (10) is mobile.

12. Construction robot according to one of claims 10 or 11, **characterized in that** it comprises a displaying means (26) capable of generating a mixed-reality image (24).

13. **Use** of a construction robot (10) according to one of the claims 10 to 12 for installing an object (46) onto a construction element (14) or at least for preparing the construction element (14) for the installation of the object (46).
